(19) Europäisches Patentamt
European Patent Office
Office européen des brevets

(11) **EP 3 839 598 B1**

(12) **EUROPEAN PATENT SPECIFICATION**

(45) Date of publication and mention
of the grant of the patent:
**27.08.2025 Bulletin 2025/35**

(21) Application number: **20215184.1**

(22) Date of filing: **17.12.2020**

(51) International Patent Classification (IPC):
*G02B 21/33* (2006.01)   *C12Q 1/68* (2018.01)
*G02B 21/06* (2006.01)   *G01N 21/64* (2006.01)
*G02B 21/16* (2006.01)   *G02B 21/24* (2006.01)

(52) Cooperative Patent Classification (CPC):
**G02B 21/06; G01N 21/6452; G02B 21/16;
G02B 21/245;** G02B 21/33

(54) **APPARATUS AND SYSTEM FOR SINGLE-MOLECULE NUCLEIC ACIDS DETECTION**

VORRICHTUNG UND SYSTEM ZUR DETEKTION VON EINZELMOLEKÜLNUKLEINSÄUREN

APPAREIL ET SYSTÈME DE DÉTECTION D'ACIDES NUCLÉIQUES À MOLÉCULE UNIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2019 US 201962950551 P**

(43) Date of publication of application:
**23.06.2021 Bulletin 2021/25**

(60) Divisional application:
**25188571.1**

(73) Proprietor: **Personal Genomics Taiwan, Inc.
30261 Hsinchu County (TW)**

(72) Inventors:
• **CHIOU, Chung-Fan
Cyonglin Township, Hsinchu County 307 (TW)**
• **CHANG, Kuang-Po
403 West Dist., Taichung City (TW)**
• **YEN, Chi-Fu
Sinjhuang Dist., New Taipei City 242 (TW)**
• **LIN, Sheng-Fu
Zhubei City, Hsinchu County 302 (TW)**

(74) Representative: **2K Patentanwälte Blasberg
Kewitz & Reichel
Partnerschaft mbB
Schumannstrasse 27
60325 Frankfurt am Main (DE)**

(56) References cited:
WO-A1-2014/207089    WO-A1-2016/023011
US-A1- 2003 151 735    US-A1- 2010 297 647
US-A1- 2011 306 039    US-B2- 6 682 927
US-B2- 6 867 851

**Description**

**CROSS REFERENCE TO RELATED APPLICATIONS**

This application claims the benefit of prior-filed provisional application with application No. 62/950,551, filed December 19, 2019.

**BACKGROUND**

[Field of the Invention]

The present disclosure relates to a bioassay system, in particular, a system including a detection module for single-molecule nucleic acids sequencing.

[Description of Related Art]

Continuous single-molecule nucleic acid sequencing method is a promising method to sequencing DNA/RNA/mRNA/modified DNA/modified RNA in high speed and long length. To perform this method needs an optical system to continuously monitor a single polymerase replicating a template DNA/RNA molecule (the molecule to be sequenced) and distinguishing the fluorescent signal associated with the incorporation events, therefore, the order of the nucleic acid bases of that template molecule is read out. Science 02 Jan 2009: Vol. 323, Issue 5910, pp. 133-138 disclosed a sequencing method, dye determination method is employed for DNA sequencing applications to determine the fluorescently labeled nucleotide (A, T, G, C) sequence of a given DNA fragment at specific reaction sites on a DNA nanostructure arrays.

A sequencing site is a location able to affix or hold or confine the polymerase replication complex, i.e. polymerase with a template and primer, in position. Large number of sequencing sites usually arranged into an array format on a substrate, called sequencing chip.

A continuous single-molecule sequencing system comprises excitation light source, sequencing chip, fluorescent optical setup, and optical sensors. The excitation light source is to provide excitation light to each sequencing sites. The fluorescent optical setup is configured to collect and guide fluorescent signal emitted from each sequencing sites on the sequencing chip to the optical sensor. The optical sensor used is formed by an array of photodetectors, also called image sensor or area sensor. Each photodetector on the sensor is called a pixel. Since there are four nucleotide bases need to be differentiated, the optical sensor needs to be able to differentiate multi-wavelength bands of labelling fluorophores.

The performance of a sequencing system. To make a sequencing system able to catch the fluorescent light emitted from the incorporation event without disturbed by all the labeled dNTPs floating around the polymerase, the replication complex (or sequencing complex, formed by polymerase/template/primer) needs to be fixed in one position (sequencing site). And the system needs to provide a light source that only excites the fluorophore that comes close enough to the polymerase (confined excitation space) and a sensor that only receiving signal coming closing from the polymerase (confined observation space). In order to increase the system efficiency, a system with multiple sequencing sites acting in parallel is preferred. The system performance can be defined as "number of sequencing site/cost of the system".

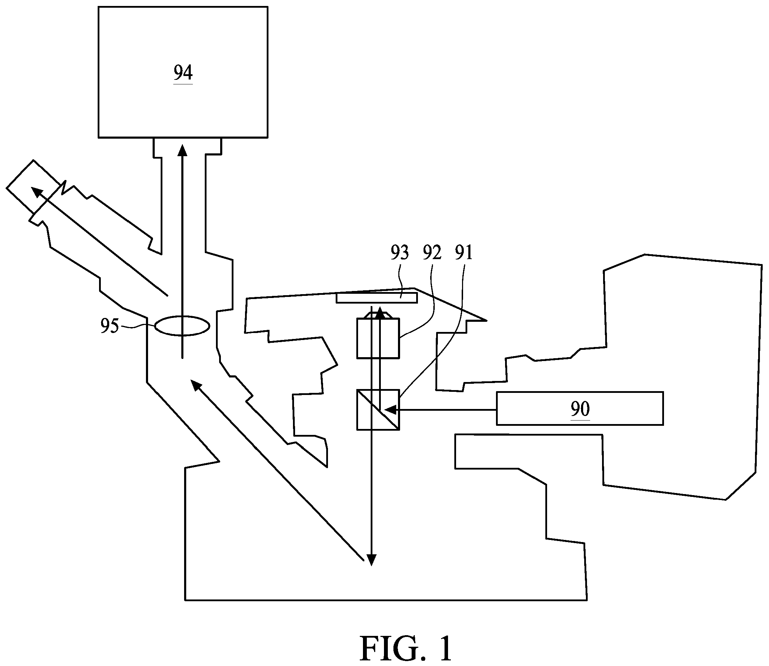

Lens-based sequencing system. In a laboratory, a high resolution total internal reflection fluorescence (TIRF) microscope is able to be converted to a continuous nucleic acid DNA single-molecule sequencer. FIG. 1 is a schematic view of an inverted microscope, a typical TIRF microscope. Laser beam launches from a laser launcher **90** through a filter cube **91** into a high NA (typically 1.5 NA) 60X or 100X oil immersion objective lens **92** arranged to create TIRF condition on an upper surface of a coverslip **93** where continuous nucleic acid DNA single-molecule sequencing taking place. The objective lens **92** is infinity corrected. The fluorescent light image collected by the objective lens **92** and passing through the filter cube **91** which removes laser wavelengths and reserves only the fluorescent light of interest. With some other optical elements such as mirrors, prisms, and relay lenses (not shown), the beam of image projected onto a sensor device **94** to form an enlarged image by a projection lens **95** (also called field lens or tube lens). Fluorescent image collected by the sensor device **94** is then analyzed and translated into sequencing data. Since the lenses are used in providing excitation light and collecting fluorescent light, this type of system is called lens-based sequencing system. The sequencing sites number of a lens-based system is between several thousands to tens of thousands, depending on the specifications of the lens and sensor.

U.S. Pat. No. 8,318,094 and U.S. Pat. No. 7,170,050 disclosed a sequencing system, more than 100,000 sequencing sites are provided. The reaction sites on the chips of these systems typically featuring micro lenses or micro mirrors to increase the amount of fluorescent light collection efficiency. However, these micro-optical elements prohibited the reduction of the pitch of the reaction sites hence the density cannot be further increased. The micro-optical element increases the chip manufacturing process and cost. Also, such systems typically employ an assortment of different optical elements to direct, modify, and otherwise manipulate light directed to and/or received from a reaction site. The system is bulky and sensitive to the environmental vibration due to its excitation light spots array needs to be precisely aligned with sequencing sites array. These systems employ lens to collect fluorescent light from sequencing chip can be classified as a special case of lens-based sequencing systems. The total number of sequencing sites can be monitored by best-ever commercial lens-based sequencing system is 150,000. In contrast, the sequencing chip in lens-based system is simple and relatively low cost.

US 6867851B2 discloses an image detection apparatus comprising a light source and a holding apparatus adapted to hold a substrate on which a biological sample may be mounted. Light from the light source impinges on the biological sample and causes light that is representative of the sample to be emitted from the sample. A light detector is positioned in the path of the emitted light and is scanned across the emitted light. The emitted light may be focused on the light detector with an optical assembly. The emitted light may be generated by chromophores on probes in the biological sample.

US 20030151735A1 discloses an image detection apparatus comprising a light source and a holding apparatus adapted to hold a substrate on which a biological sample may be mounted. Light from the light source impinges on the biological sample and causes light that is representative of the sample to be emitted from the sample. A light detector is positioned in the path of the emitted light and is scanned across the emitted light. The emitted light may be focused on the light detector with optical assembly. The emitted light may be generated by chromophores on probes in the biological sample.

US 20100297647A1 relates to an assay method for determining the base sequence in a nucleic acid sample which comprises detection of a single base in said sequence using a polymerase modified to include at least one fluorophore and a dark quencher group; detecting and deducing the amount of energy transfer.

WO2014207089A1 discloses a waveguide structure (1) for evanescent wave microscopy and/or spectroscopy, comprising an optically transparent core layer (3), a first dielectric cladding layer (4) and a second dielectric cladding layer (5) arranged on opposite sides of the core layer (3). The core layer (3) has a refractive index higher than the refractive indices of the cladding layers (4, 5). The second cladding layer (5) is made of an organic material. A sample well (6) is arranged on an upper surface of the core layer (3) formed by a cavity in the second cladding layer (5), the sample well (6) being adapted to contain a sample medium (7) with one or more sample objects (9, 10). The core layer (3) is made of a first dielectric inorganic material, and the second cladding layer (5) has a refractive index which closely matches the refractive index of the sample medium. A method for manufacturing such waveguide structure, and a measurement system comprising the waveguide structure are also disclosed.

WO02016023011A1 discloses System and methods for analyzing single molecules and performing nucleic acid sequencing. An integrated device includes multiple pixels with sample wells configured to receive a sample, which when excited, emits radiation. The integrated device includes at least one waveguide configured to propagate excitation energy to the sample wells from a region of the integrated device configured to couple with an excitation energy source. A pixel may also include at least one element for directing the emission energy towards a sensor within the pixel. The system also includes an instrument that interfaces with the integrated device. The instrument may include an excitation energy source for providing excitation energy to the integrated device by coupling to an excitation energy coupling region of the integrated device. One of multiple markers distinguishable by temporal parameters of the emission energy may label the sample and configuration of the sensor within a pixel may allow for detection of a temporal parameter associated with the marker labeling the sample.

US 20110306039A1 discloses an apparatus for detecting an object capable of emitting light. The apparatus comprises a light source and a waveguide. The waveguide comprises a core layer and a first cladding layer. At least one nanowell is formed in at least the first cladding layer. The apparatus further comprises a light detector. The light detector can detect a light emitted from a single molecule object contained in the at least one nanowell.

Regarding the chip-based sequencing system. In another embodiment, U.S. Pat. No. 7,767,441 disclosed a sequencing system, wherein a sequencing sites array, an excitation light distribution waveguide and a sensor are integrated into one chip. This system integrated sequencing chip and optical sensor into one piece can be called as chip-based sequencing systems. The number of sequencing sites is depended upon the size of the chip can be millions or tens of millions. However, the manufacturing cost of the chip is very high and it is designed to be one time used which makes the operation cost not affordable by most applications.

US 6, 682, 297 (B2) discloses an apparatus for screening for translocation of a first protein of interest in vivo in a cell using an evanescent field and including a detection module and a sample cover slip which acts as a total internal reflection member.

## BRIEF SUMMARY OF THE INVENTION

In one exemplary aspect, an apparatus for continuous single molecule nucleic acids sequencing is provided according to the claims. The apparatus includes a detection module configured to detect fluorescent light generated from a sequencing chip. The detection module includes a sensor device, an objective lens having a first magnification, and a projective lens having a second magnification. The objective lens and the projective lens are configured to transmit the fluorescent light from the sequencing chip to the sensor device. The second magnification is less than unity.

For the purpose of disclosure an apparatus for continuous single molecule nucleic acids sequencing is provided. The apparatus includes a sequencing chip having a plurality of sequencing sites arranged by a pitch and a detection module for detecting fluorescent light generated from the sequencing sites. The detection module includes a sensor device having a plurality of pixels, each of the pixels having a pixel size, and a lens set having an objective lens and a projective lens. The objective lens and the projective lens are configured to transmit the fluorescent light from the sequencing sites to the sensor device, and the lens set having an overall magnification. A product of the pitch and the overall magnification is equal to or greater than one pixel size and equal to or smaller than 2 pixel sizes.

In yet another exemplary aspect, an apparatus for continuous single molecule nucleic acids sequencing is provided. The apparatus includes a detection module configured to detect fluorescent light generated from a sequencing chip. The detection module includes a sensor device with a plurality of pixels, each of the pixels having a pixel size, and a lens set having an objective lens and a projective lens, the objective lens and the projective lens being configured to transmit the fluorescent light from the sequencing chip to the sensor device. A projected spot size of the fluorescent light on the sensor device is smaller than or equal to 1.5 times of the pixel size.

For the purpose of disclosure a sequencing chip for continuous single molecule nucleic acids sequencing is provided. The sequencing chip includes a substrate, a waveguide, a light coupler, a sequencing site, and a beam adjusting mechanism. The waveguide is over the substrate. The waveguide includes a core layer and an upper cladding layer over the core layer. The light coupler extends from the upper cladding layer into the core layer. The sequencing site is in the upper cladding layer. The beam adjusting mechanism is configured to adjust a total projection area of a beam from the light coupler when propagating toward the sequencing site.

**BRIEF DESCRIPTION OF THE DRAWINGS**

FIG. **1** illustrates a schematic cross-sectional view of a conventional TIRF microscope.

FIG. **2** illustrates a schematic view of a design of lens-based single-molecule sequencing system according to some embodiments of the present disclosure.

FIG. **3** illustrates a schematic view of a typical microscope objective lens.

FIG. **4** illustrates a schematic view of numerical aperture (NA) of an objective lens according to some embodiments of the present disclosure.

FIG. **5** illustrates a field of view (FOV) of a lens system.

FIG. **6** illustrates a spatial resolution of an optical system.

FIG. **7** illustrates a schematic view of a nanowell according to some embodiments of the present disclosure.

FIG. **8A** and FIG. **8B** illustrate the field strength distribution of epi excitation and evanescent wave excitation.

FIG. **9A** and FIG. **9B** illustrate lens type and prism type TIRF according to some embodiments of the present disclosure.

FIG. **10** illustrates that spot size may affect signal strength on a pixel according to some embodiments of the present disclosure.

FIG. **11** illustrates a schematic view of an apparatus for continuous single molecule nucleic acids sequencing according to some embodiments of the present disclosure.

FIG. **12** illustrates a schematic cross-sectional view of a sequencing chip according to some embodiments of the present disclosure.

FIG. **13** illustrates a schematic top view of general circular type nanowells according to some embodiments of the present disclosure.

FIG. **14** illustrates a schematic top view of trench type nanowells according to some embodiments of the present disclosure.

FIG. **15** illustrates a schematic top view of trench type nanowells according to some embodiments of the present disclosure.

FIG. **16** illustrates a schematic top view of general circular type nanowells according to some embodiments of the present disclosure.

FIG. **17** illustrates a schematic top view of trench type nanowells according to some embodiments of the present disclosure.

FIG. **18** illustrates a schematic top view of trench type nanowells according to some embodiments of the present disclosure.

FIG. **19A** illustrate a schematic top view of a waveguide having a beam expanding mechanism according to some embodiments of the present disclosure.

FIG. **19B** illustrate a schematic top view of a spacer according to some embodiments of the present disclosure.

FIG. **19C** illustrate a schematic top view of a cover according to some embodiments of the present disclosure.

FIG. 20 illustrates a pitch of nanowell and a pitch and is also the sizes of the pixels on a sensor device according to some embodiments of the present disclosure.

FIG. **21** illustrates the spectral bands of the labeled fluorophores detected by three channels.

FIG. **22** illustrates a Philips type prism according to some embodiments of the present disclosure.

FIG. **23** illustrates a dispersive device for spectral detection according to some embodiments of the present disclosure.

FIG. 24 is a SEM cross sectional image of a sequencing chip with a nanowell according to some embodiments of the present disclosure.

FIG. **25A** and FIG. **25B** illustrate snap shots of frames of sequencing raw data.

FIG. **26** illustrates a sequencing time trace from one nanowell of one channel.

## DETAILED DESCRIPTION

The following disclosure provides many different embodiments, or examples, for implementing different features of the provided subject matter. Specific examples of elements and arrangements are described below to simplify the present disclosure. These are, of course, merely examples and are not intended to be limiting. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed.

Further, spatially relative terms, such as "beneath," "below," "lower," "above," "upper", "on" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly.

As used herein, the terms such as "first", "second" and "third" describe various elements, components, regions, layers and/or sections, these elements, components, regions, layers and/or sections should not be limited by these terms. These terms may be only used to distinguish one element, component, region, layer or section from another. The terms such as "first", "second", and "third" when used herein do not imply a sequence or order unless clearly indicated by the context.

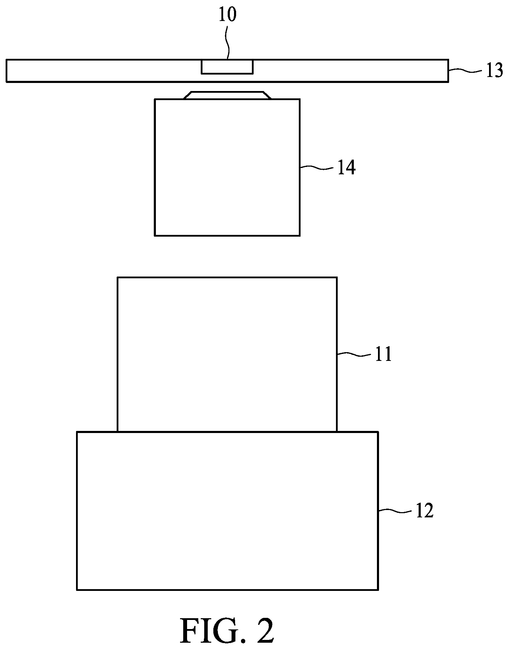

FIG. **2** illustrates a schematic view of a design of lens-based single-molecule sequencing system which mostly follows the design principle for single-molecule detection. An infinity corrected objective lens is used to collect fluorescent light from sequencing sites **10** and a projection lens **11** projects the signal of sequencing sites **10** to an optical sensor set **12.** Generally, the objective lens is used to collect fluorescent light from the sequencing sites and the projection lens (also called as field lens or tube lens) is used to project the signal of sequencing sites to the optical sensor set. In some embodiments, the sequencing system further includes a microfluidic structure coupled to the nanowells, and the samples are loaded onto the sequencing chip **13** through the microfluidic structure. The microfluidic structure may spread the samples on the sequencing chip **13** evenly or distribute the samples to the designated nanowells.

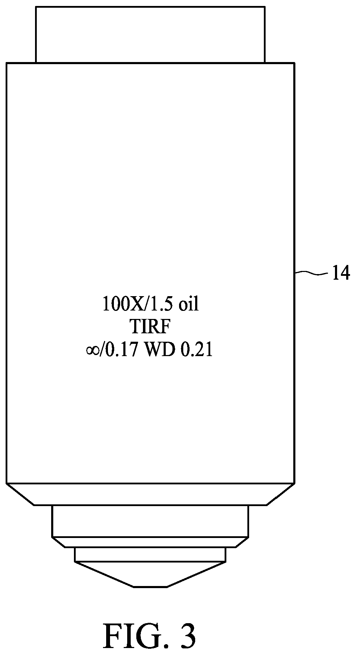

FIG. 3 illustrates a schematic view of a typical microscope objective lens **14**. Usually, the magnification of the objective lens **14** is marked on the body thereof, such as "100X" as shown in the figure. In an ordinary microscope, a 100X objective lens is working with a default or preset 1X projection lens as shown in FIG. 1, and the lens set may result an overall 100X magnification. Since a microscope is utilized to enlarge the detailed structures of the specimen, the magnification of projection lens is always equal to or greater than unity. Accordingly, the most common magnification of the projection lens is 1X in order to render the magnification marked on the objective lens body, while 2X or greater magnification is also available.

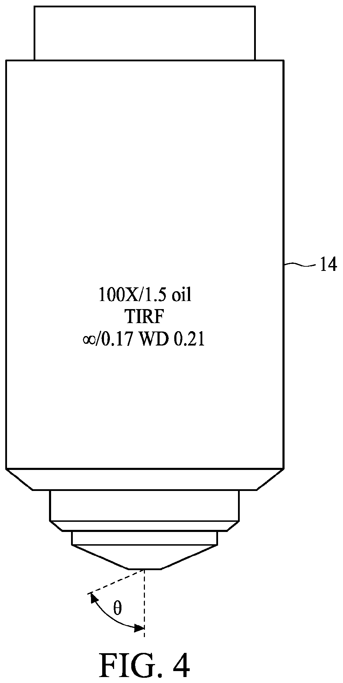

FIG. **4** illustrates a schematic view of numerical aperture (NA) of the objective lens **14**. The NA of the objective lens **14** is a dimensionless number that characterizes a range of angles over which the emitted fluorescent light can be collected by the objective lens **14,** while an objective lens with a higher NA may collect more light. Usually, the NA of the objective lens **14** is also marked on the body thereof, such as "1.5" as shown in the figure. The governing formula may be illustrated as $NA = n \times \sin\theta$, wherein n is the refractive index of the immersed medium and $\theta$ is the collection angle of the objective lens. To reach high single-molecule sensitivity, the NA of the objective lens **14** must be higher than a certain level. Generally, the minimum NA is affected by the sensor performance specifications and optical lens arrangement.

In a lens-based single-molecule sequencing system, the NA of the objective lens **14** is smaller than 1, 0.9, 0.8, or 0.7.

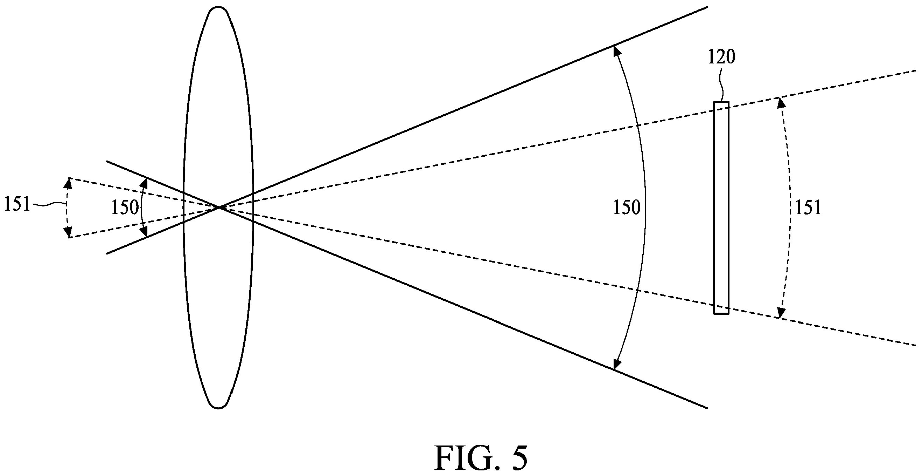

The field of view (FOV) of the lens-based optical module is the diameter of the circular area that can be imaged by the system as shown in FIG. **5**. Since a sensor **120** is used to receive the image projected from the optical module, an effective FOV **151** may be determined by the overlap between a lens FOV **150** and a corresponding area at the sensor **120**. If the size of the sensor **120** is larger than the lens FOV **150** projected thereon, the effective FOV **151** is thus dominated by the lens. Otherwise, the effective FOV **151** is restricted by the size of the sensor **120**.

An effective chip area is the area on the sequencing chip **13** that corresponded to the effective FOV **151** of the optical module. To achieve high performance, the sequencing sites **10** need to be arranged within the effective chip area as much as possible to ensure the accommodation of the sequencing sites **10**. A pitch may be defined as the distance between each two adjacent sequencing sites **10**. There are several factors that may prohibit the sequencing sites **10** getting too close.

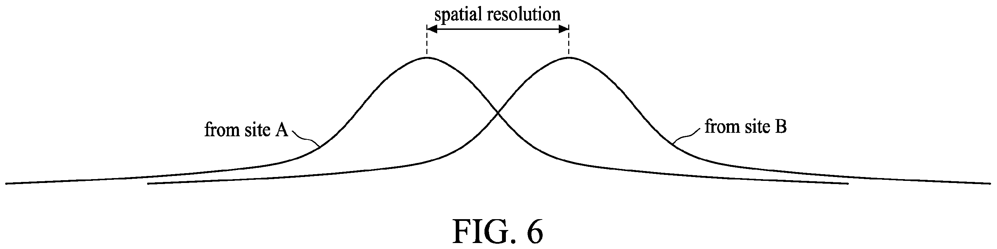

For example, the optical spatial resolution is the minimum pitch that the optical module be able to distinguish signals from two neighboring sequencing sites **10**. Due to the nature of light, signals from different sequencing sites **10** are normally distributed as a Gaussian distribution. As shown in FIG. **6,** the fluorescent light signals from single molecule sequencing site A and site B are projected onto the sensor plane. There is no distinct boundary of each signal beam spot and they are always partially overlapped and cannot be completely separated. Whenever the locations of site A and site B are distant enough and the overlap of the signal beam spot thereof does not beyond the resolvable level, the signals from these two sites are distinguishable. Accordingly, the minimum distance between the signals from site A and site B is called as the spatial resolution of an optical system.

Usually, high numerical aperture (NA) of an objective lens may provide high spatial resolution due to the governing equation that the resolution $(r) = 0.61 \times$ wavelength $(\lambda)/NA$, and hence the sequencing sites **10** can be arranged closer or denser with small pitch for resolving smaller features. That means more sequencing sites **10** can be arranged within the same area. Therefore, the design of the optical system is to provide a combination of lens module and sensors that may be used to identify more sequencing sites and so that ultimately a best performance may be provided.

An example is given bellow to explain the traditional lens-based single-molecule system design. In such example, a sensor has an array of 2000 x 1500 pixels, and each the pixel size is 3.45 $\mu$m squared. Table **1** is the spatial resolution of lenses with different magnifications and NA values.

The 60X oil immersion lens with NA 1.5 has a spatial resolution of 0.24 $\mu$m, i.e. the minimum pitch of sequencing sites is 0.24 $\mu$m. The 60X objective lens with 1X projection lens will magnify the 0.24 $\mu$m pitch to 14.4 $\mu$m pitch on sensor plane. The maximum total number of sequencing sites can be imaged is (3.45 x 2000)/14.4 x (3.45 x 1500)/14.4 = 479 x 359 = 171,961 (sequencing sites).

Table **1**

| Lens | 100X oil | 60X oil | 40X oil | 20X air |
|---|---|---|---|---|
| Magnification | 100 | 60 | 40 | 20 |
| NA | 1.5 | 1.5 | 1.3 | 0.7 |
| FOV (D, $\mu$m) | 220 | 366 | 550 | 1100 |
| SR ($\mu$m) | 0.24 | 0.24 | 0.28 | 0.5 |
| Number of Sites1 | 61,705 | 171,961 | 284,592 | 356,730 |
| Number of Sites2 | 61,705 | 136,354 | 100,178 | 31,416 |
| Number of Pixel per Site | 48 | 17 | 11 | 8.4 |

In Table **1,** the row titled "Number of Sites 1" is the results that optical spatial resolution of the lens module is the only major factor taken into consideration.

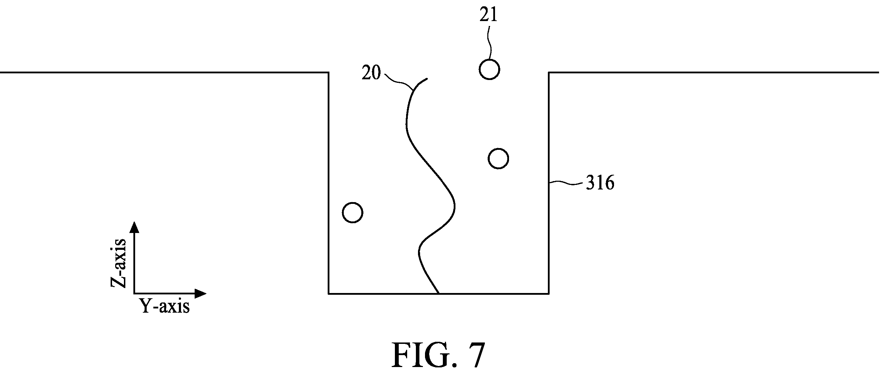

The continuous single-molecule sequencing requires a certain substrate concentration level to maintain polymerase incorporation in a reasonable speed. As shown in FIG. **7,** even though some labeled triphosphate nucleotide **21** are not incorporated as the molecule being sequenced **20,** the fluorophore or fluorescent dye attached on those triphosphate nucleotides may emit unwanted fluorescent light that have the same wavelength once they are excited. That is, all of the fluorescent dyes entering observation space, i.e., the sequencing nanowell, may generate fluorescent light and thus become unwanted "fluorescent background". The details of the nanowell will be described later. A resolvable detected incorporation event should have a high ratio of "(incorporating signal + fluorescent background)/ (fluorescent background)", where, the fluorescent background can be estimated from substrate concentration, excitation field distribution and observation volume of corresponded pixel.

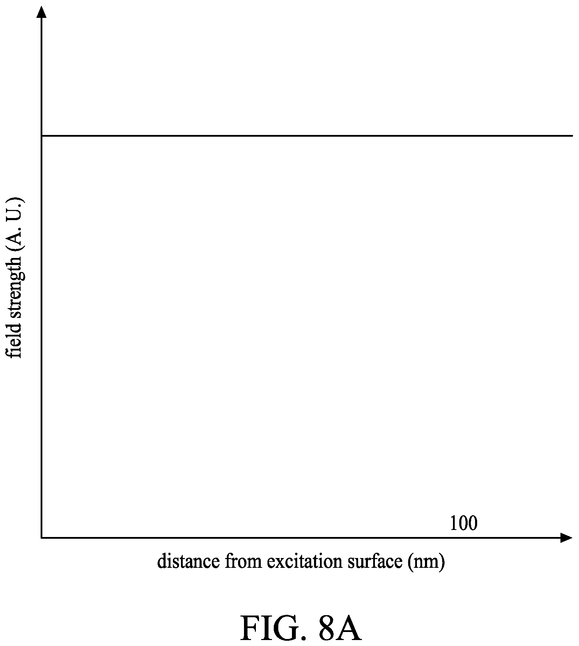

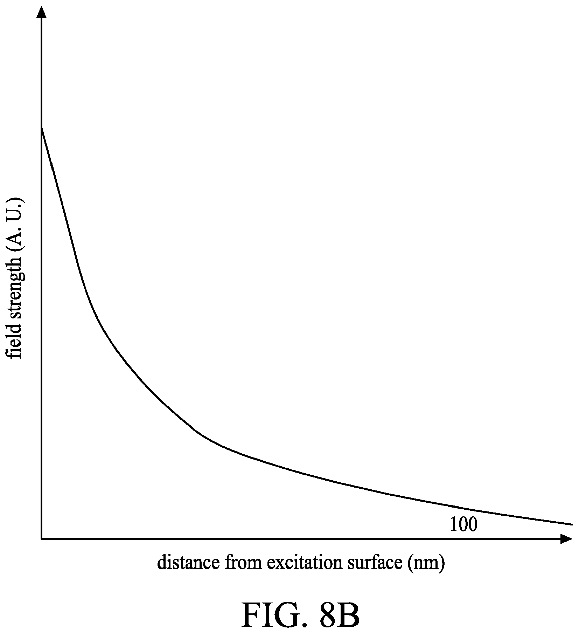

A meaningful observation volume for this situation is the space that fluorescent light can go through lenses to reach the corresponded pixel. If epi-excitation is used as shown in FIG. **8A,** none of the lenses listed in above Table **1** is able to detect single-molecule events at 1 $\mu$m substrate level since quite a lot of background molecules would be excited and overwhelming the single-molecule signal. To overcome this interference issue, the single-molecule sequencing system may deploy evanescent wave as shown in FIG. **8B** to provide excitation energy to the sequencing sites **10** without increasing the background fluorescent signal. The evanescent wave may decay in an exponential manner and quickly fading away beyond 100 nm range.

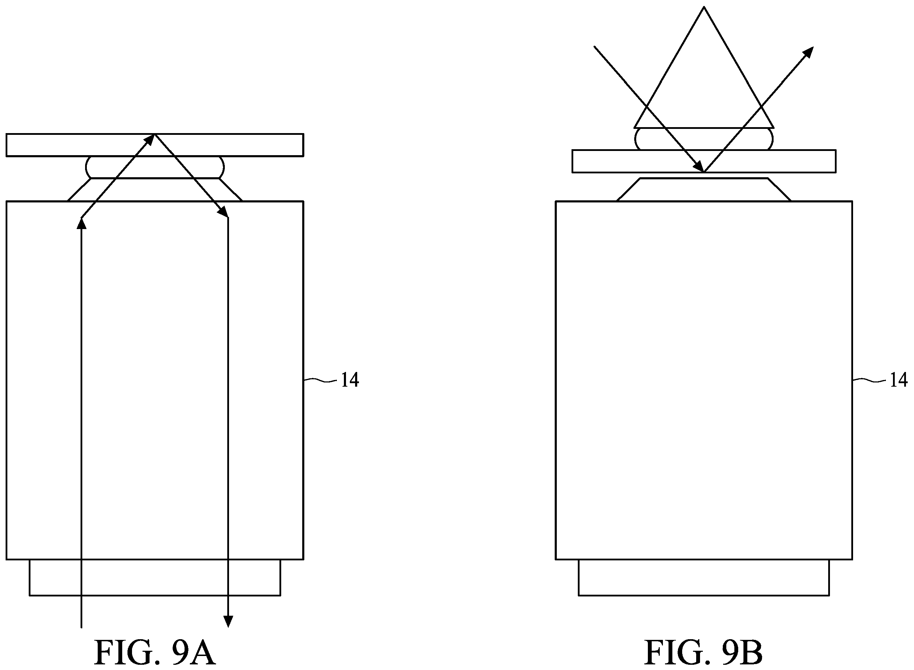

The lens-based total internal reflection (TIRF) as shown in FIG. **9A** or the prism-based TIRF as shown in FIG. **9B** can confine the effective excitation energy within 100 nm range from the reflective surface. Due to the limitation of laser power, the lens-based TIRF or the prism-based TIRF can only excite a small area, for example, about 100 micro-meters in diameters. The row "Number of Sites 1" in Table 1 is only the effective FOV is considered. The row "Number of Sites 2" in Table 1 is the results of assuming an excitation area around 100 $\mu$m in dimension. It is shown in Table **1** that the available sequencing sites of a lens-based system based upon traditional design (i.e., by using 60X oil immersion lens) is around 150,000. The effective FOV can be increased by applying a large area sensor, but the system limitation will be the area of evanescent wave excitation field. In the present disclosure, the laser power is guided by a 250 nm waveguide core and within 100 nm evanescent wave range rather than 100 $\mu$m beam size hence resulting strong field intensity across the whole sequencing chip so that extending 2 mm area wide rather than 100 $\mu$m. Therefore, there are more sequencing sites **10** can be arranged in the excitation area. In some embodiments, there are more than 1 million sequencing sites **10** may be arranged and observed in a 2 mm x 2 mm area.

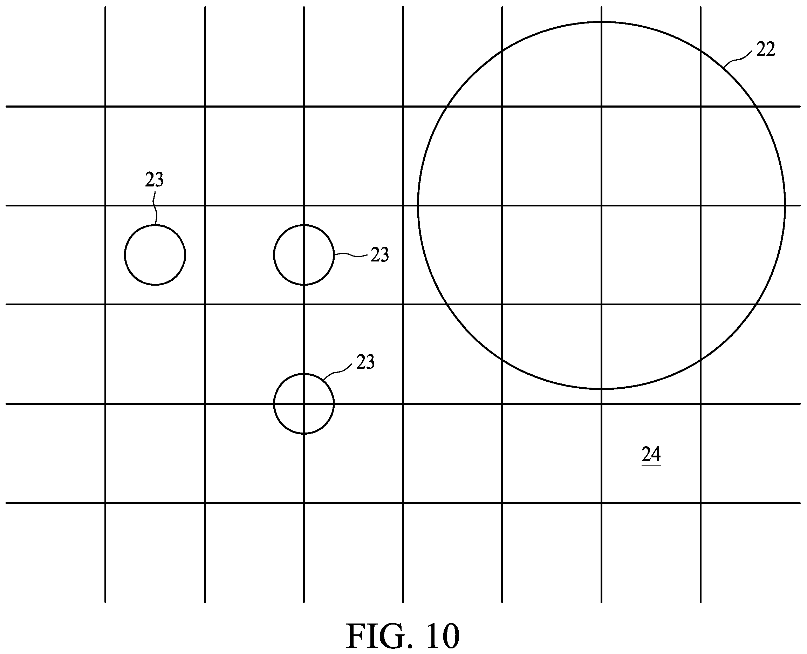

Regarding to the sensitivity of sensor, due to the magnification nature of a microscope, a sequencing site emission may spread out onto several pixels **24,** such as the "big spot" **22** illustrated in FIG. **10.** Accordingly, the signal intensity may be divided by these pixels which make the signal too weak to be detected by each of the pixels **24** of the CMOS image sensors. Even though some scientific grade CCD, ICCD, EMCCD, or special designed scientific grade CMOS sensor may be applied to detect weak signals, they are usually bulky and expensive components which may significantly increase the size, weight, and overall cost of the system. Ideally, while a sequencing site emission is projected onto just one or two or at most four pixels **24,** as the "small spots" **23** illustrated in FIG. **10,** the signal is comparatively concentrated and may drastically increase the detected signal intensity. As a result, a reasonable priced modern CMOS sensor is sensitive enough to detect the signal. Nowadays a quality CMOS sensor is achieving 60% of peak quantum efficiency which is not far from scientific grade one at 90%. This disclosure may employ modern industrial or surveillance grade CMOS sensor and avoid using the luxury scientific grade sensors by arranging the sequencing chips and optical elements appropriately. Indeed, though the projected spot size can be as small as or smaller than the pixel **24,** the projection may overlap the boundary of pixels **24** and resulting two or the worst four adjacent pixels **24** sharing the same signal from a sequencing site. However, in the scenario that the signal divided by four, the signal strength scattered on each of the four pixels is still strong enough to be detected.

The present disclosure provides a design rule of lens-based continuous single-molecule sequencing apparatus. Based upon the disclosed design rule, a lens-based continuous single-molecule sequencing system can have more than 150,000, 300,000, 500,000 or 1,000,000 sequencing sites. According to Nyquist sampling theorem, 1 sequencing well can be resolved by 2 x 2 pixels of the sensor. Hence a 5 million pixels sensor is able to resolve more than one million sequencing wells.

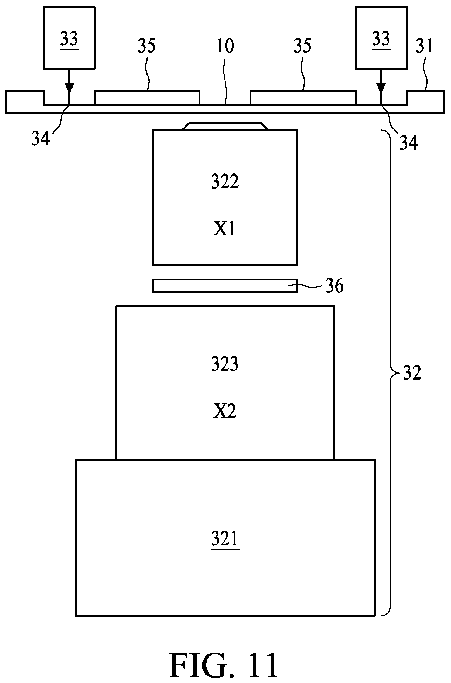

As shown in FIG. 11, a sequencing chip 31 and a detection module 32 are included. In some embodiments, the detection module **32** includes a sensor device **321,** an objective lens **322** having a first magnification, and a projective lens **323** having a second magnification. In some embodiments, the objective lens **322** and the projective lens **323** are configured to transmit the fluorescent light from the sequencing chip **31** to the sensor device **321.** The second magnification is less than unity. In some embodiments, a laser source **33** may be coupled to the sequencing chip **31** via a laser coupler **34** and thus a laser light is guided to the sequencing sites **10** by a waveguide **35** of the sequencing chip **31.** Laser source **33** is as close as possible to the sequencing chip **31** to avoid unwanted scattering light to the enclosed space. The distance between them is smaller than 1 mm, is smaller than 0.5 mm or is smaller than 0.3 mm. In some embodiments, the sequencing signal is collected by the objective lens **322** and passed through a filter **36** to block the wavelength of the laser light before the sequencing signal is projected onto the sensor device **321** by the projection lens **322.**

In some embodiments, the first magnification of the objective lens **322** is configured to collect the fluorescent light. In some embodiments, the second magnification of the projective lens **323** is configured to project the fluorescent light from the objective lens to the sensor device. The second magnification of the projective lens **323** is less than unity, less than 0.5X or less than 0.25X.

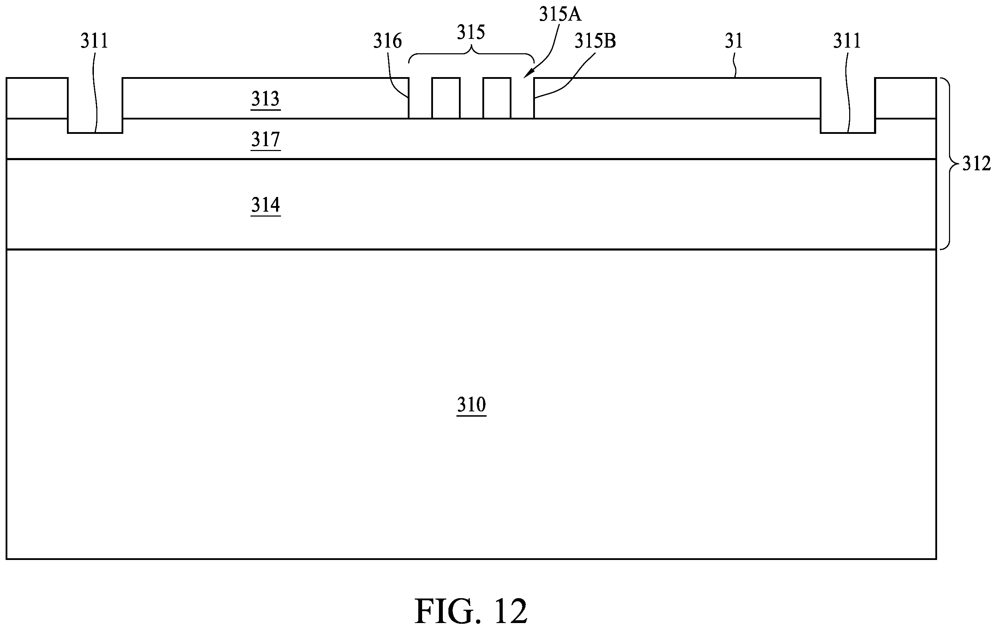

As shown in FIG. 12, the sequencing chip **31** includes a substrate **310,** a thin-film or a channel waveguide **312** over the substrate **310,** a light coupler **311** formed at the waveguide **312.** In some embodiments, the waveguide **312** includes an upper cladding layer **313,** a lower cladding layer **314,** and a nanowell sequencing site array **315.** In some embodiments, the nanowell sequencing site array **315** includes a plurality of nanowells **316.** In some embodiments, a core layer **317** having a bottom surface and a top surface opposite to the bottom surface may be sandwiched by the upper cladding layer **313** and the lower cladding layer **314.** The light coupler **311** is configured to couple an excitation light into the waveguide **312,** and the waveguide **312** confines and guides the excitation light to the nanowell sequencing site array **315** and forming an evanescent wave excitation field as previously shown in FIG. 8B from a bottom of each of the nanowells **316.** That is, the light field intensity is stronger at the bottom and weaker away from the bottom in a manner of exponential decay as shown in FIG. 8B. In a preferred scenario, the field intensity on a top of the upper cladding layer **313** is weak and neglectable or close to zero. So that the floated or non-incorporated fluorophore over an upper surface of the upper cladding layer **313** may not generate unwanted fluorescent background signal. In some embodiments, the nanowell sequencing site array **315** is fabricated in the upper cladding layer **313** with an upper opening **315A** and a cylindrical wall **315B,** and a bottom of the nanowell sequencing site array **315** is at or close to an upper surface of the core layer **317.** In some embodiments, the cylindrical wall **315B** is formed in the upper cladding layer **313** of the waveguide **312.** In some embodiments, the bottoms of each of the nanowells **316** may be coplanar to an upper surface of core layer **317** or has a thin-bottom layer (not shown in the figure) covering the upper surface of core layer **317.** The thin-bottom layer of the nanowells **316** may be made by a material identical to or different to that of the upper cladding layer **313.**

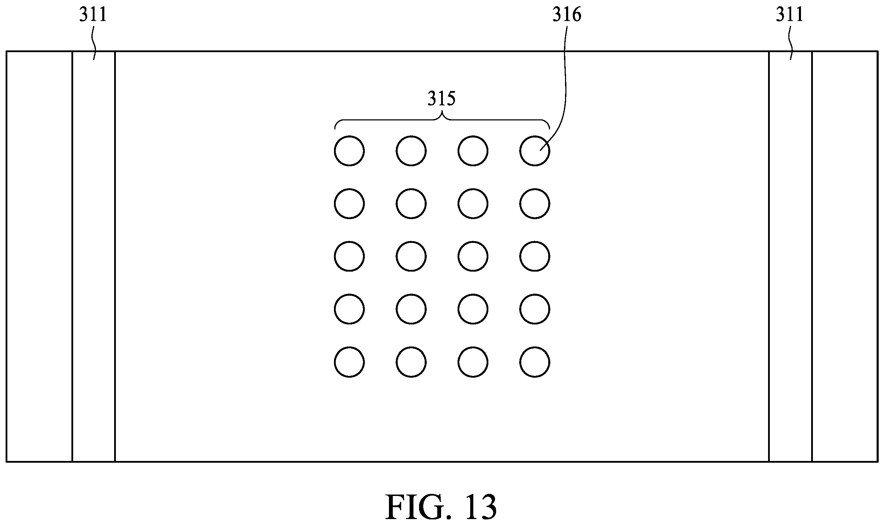

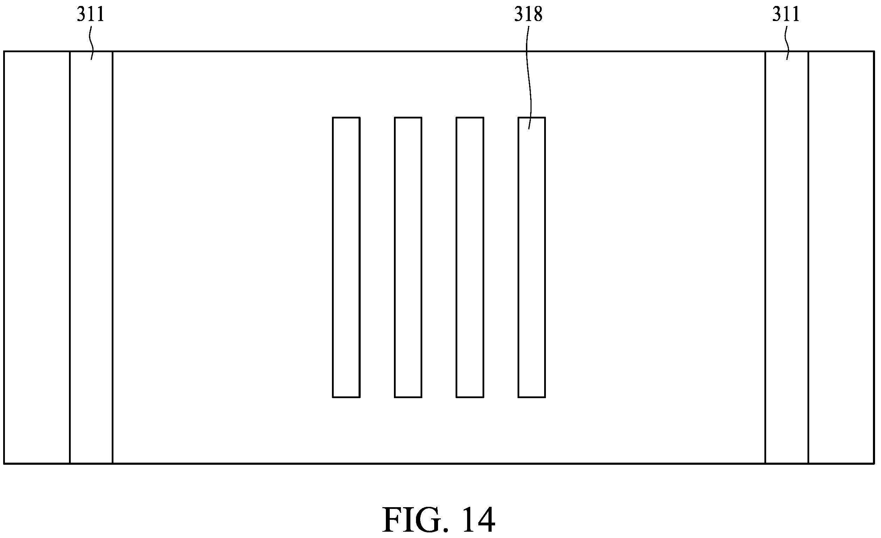

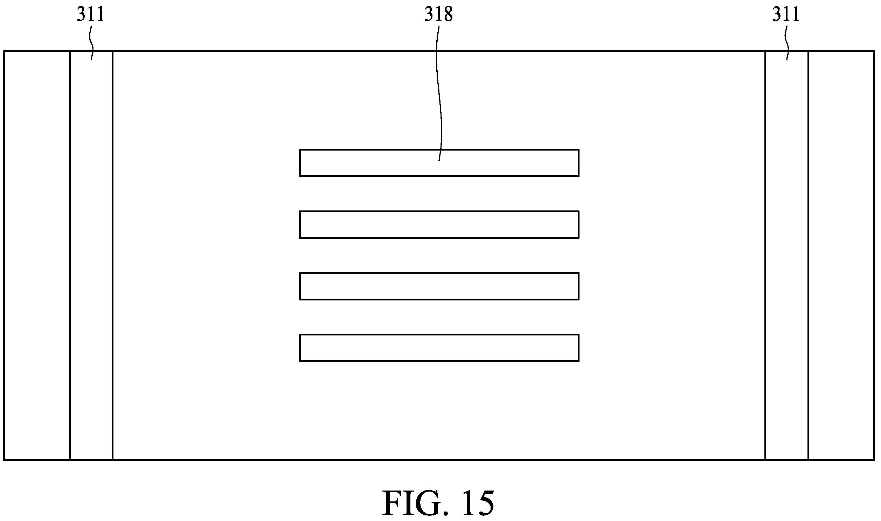

In some embodiments, the shapes of the nanowells **316** are in general circular as shown in FIG. **13.** In some embodiments, the nanowells **316** may be formed as other shapes such as square, hexagonal, etc., from a top view perspective. In some embodiments, the nanowell **316** maybe also laterally elongated to form a long trench rather than an ordinary well. For example, the sequencing site array may include numerous nanotrenches **318** arranged in parallel as shown in FIG. **14** and FIG. **15.**

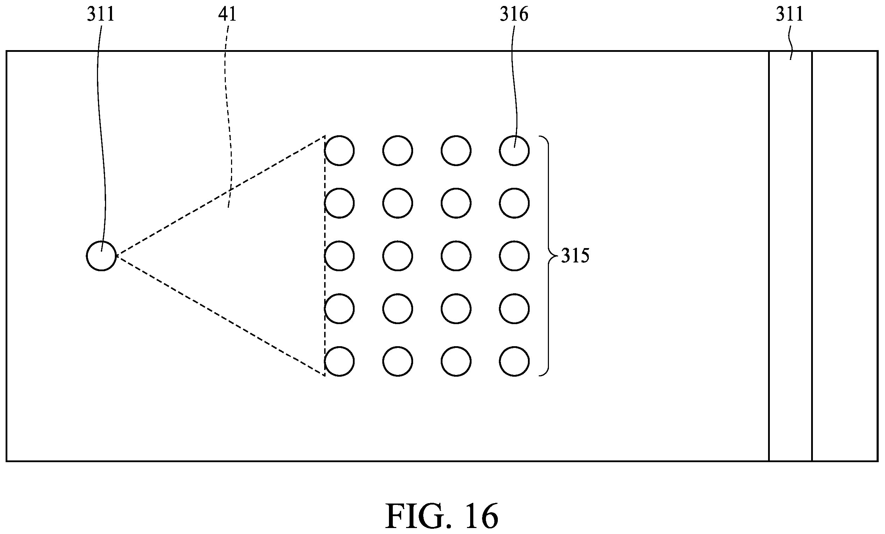

FIG. **16** illustrates a schematic top view of general circular type nanowells according to some embodiments of the present disclosure. As shown in the figure, a beam adjusting mechanism **41** of the sequencing chip may be located between a spot type light coupler **311** and a first side of a nanowell sequencing site array **315** to adjust a total projection area of each of the beams from the light couplers **311** when propagating toward the sequencing site **10.** For example, the beam adjusting mechanisms **41** may transform a narrower beam (e.g., the injected laser light) from the light coupler **311** to a wider beam entering the sequencing sites therein, while a bar type light coupler **311** is located in proximity to a second side of the sequencing site array **315.** In some embodiments, the second side is opposite to the first side and thus the sequencing site array **315** is substantially between different types of the light couplers **311.**

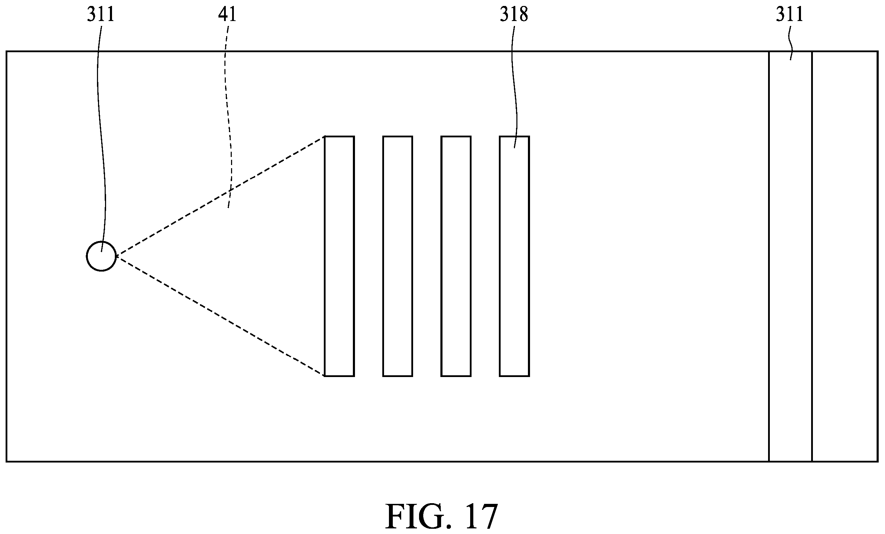

FIG. **17** illustrates a schematic top view of trench type nanowells according to some embodiments of the present disclosure. As shown in the figure, a beam adjusting mechanism **41** may be located between a spot type light coupler **311** and a sidewall of a nanotrench **318,** while a bar type light coupler **311** is located in proximity to a sidewall of another nanotrench **318.** In some embodiments, numerous nanotrenches **318** are arranged in parallel and they are parallel to the bar type light coupler **311** as well.

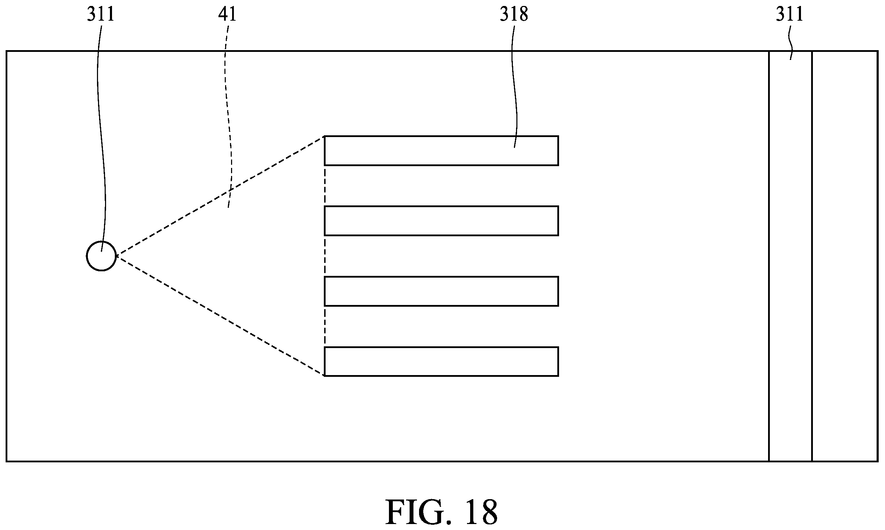

FIG. **18** illustrates a schematic top view of trench type nanowells according to some embodiments of the present disclosure. Similar with the embodiment shown in FIG. **17,** a beam adjustingmechanism **41** may be located between a spot type light coupler **311** and numerous nanotrenches **318,** while the nanotrenches **318** are arranged in parallel but perpendicular to a bar type light coupler **311**. The spot type light coupler **311** and the beam adjusting mechanism **41** are located at a first side of the array of the nanotrenches 318 while the bar type light coupler **311** is located at a second side of the array of the nanotrenches **318** opposite to the first side. In such embodiments, the beam adjusting mechanism **41** is in proximity to each end of the nanotrenches **318.**

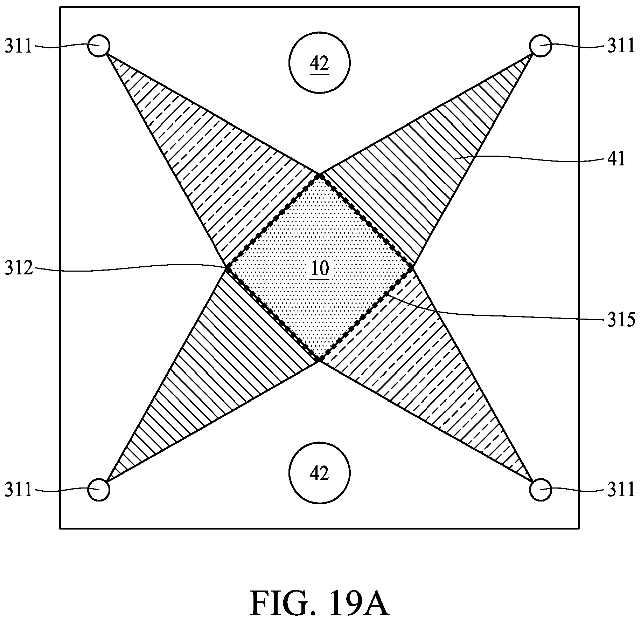

Referring to FIG. **19A,** in some embodiments, there are more than one beam adjusting mechanism **41** may be employed. For example, the beam adjusting mechanisms **41** may be located between each of the light couplers **311** and the nanowell sequencing site array **315** to adjust a total projection area of each of the beams from the light couplers **311** when propagating toward the sequencing site **10**. For example, the beam adjusting mechanisms **41** may transform narrower beams (e.g., the injected laser lights) from the light couplers **311** to wider beams entering the sequencing sites **10**. In some embodiments, the light coupler **311** includes a nano size grating structure. In some embodiments, the light coupler **311** is a bar type. In some embodiments, the light coupler **311** is a spot type. In some embodiments, the waveguide **312** is a thin-film type. In some embodiments, the waveguide **312** is a channel type. In some embodiments, the sequencing sites **10** forms the sequencing site array **315,** and the wider beam has a beam width substantially covering the sequencing site array **315.** In some embodiments, the beam adjusting mechanism **41** includes a nanostructure beam expander between the light coupler **311** and the sequencing sites **10**. In some embodiments, the nanostructure beam expander is at least a portion of the waveguide **312** and thus being a thin film waveguide or a channel waveguide. In some embodiments, the sequencing site array **315** includes 2000 x 2000 pixels, while the light coupler **311** with a diameter of about 50 $\mu$m. In some embodiments, the sequencing chip includes a pair of holes **42** for the input and output of the fluid that conveying samples.

In other embodiments, the beam adjusting mechanism may include a plurality of beam splitters to multiply the number of beam coming out from the light coupler **311** so as to allow the multiplied number of beams simultaneously propagate toward the sequencing site **10**. The multiplied number of beams may provide a greater coverage to the plurality of sequencing sites than a single beam does.

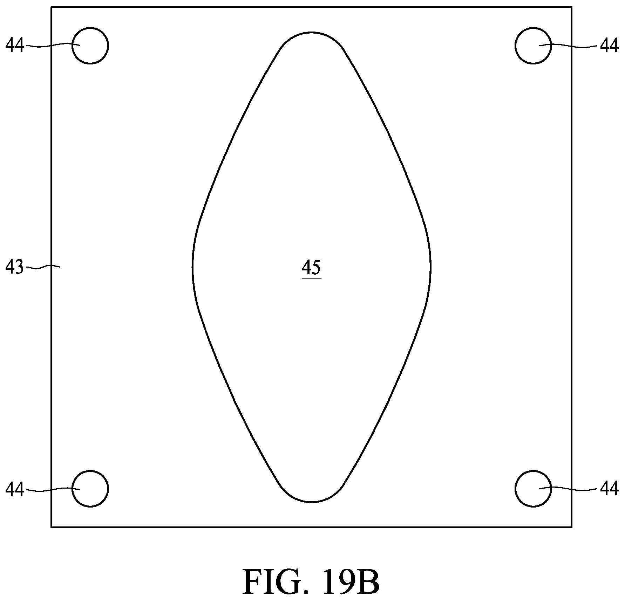

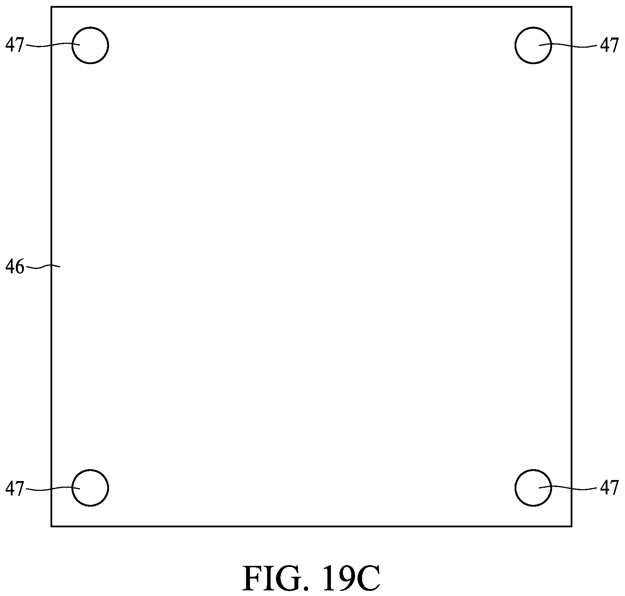

As shown in FIG. **19B,** in some embodiments, a spacer **43** may be disposed over the sequencing chip. The spacer **43** may include a plurality of first openings **44** aligning to the light couplers **311** previously shown in FIG. **19A** for the pass of the laser light. The spacer **43** may include a fluidic channel **45** at a center thereof and over the sequencing site array **315** previously shown in FIG. **19A** for storing the fluid that including samples. In some embodiments, the diameter of the opening **44** is larger than that of the light coupler **311**. As shown in FIG. **19C,** in some embodiments, a cover **46** may be disposed over the spacer **43**. The cover **46** may include a plurality of second openings **47** aligning to the first openings **44** of the spacer **43**. In some embodiments, the spacer **43** is sandwiched by the cover **46** and the sequencing chip.

In some embodiments, the polymerase replication complex can be affixed at the bottom of the nanowell **316** by linker sites as previously shown in FIG. **7.** In some embodiments, the polymerase replication complex may be affixed to the linkers by biotin-streptavidin like conjugation or covalent bonding, or by charged attraction or physically confinement.

In the case of the sequencing site array includes numerous nanotrenches **318** arranged in parallel, the linker sites in different nanotrenches **318** may be disposed with substantially identical intervals there between. In some embodiments, the interval is determined based on the consideration that such arrangement may prevent the fluorescent lights generated from each of the linker sites interfere to one another, and thus a preferred optical spatial resolution may be ensured.

In some embodiments, an interval between adjacent nanowells **316** is in a range of from smaller than 1 $\mu$m to about 5 $\mu$m. In some embodiments, an interval between the linker sites is about 3 $\mu$m. Although not being illustrated in the present disclosure, in some embodiments, there is no nanowell formed on the sequencing chip **31**. In such embodiments, the plurality of linker sites are distributed with suitable intervals on a flat surface of the sequencing chip **31.**

In some embodiments, as previously shown in FIG. 7, each of the nanowells **316** may have a width (along Y-axis) in a range of from about 50 nm to about 650 nm. Each of the nanowells may have a height (along Z-axis) in a range of from about 20 nm to about 600 nm. In some embodiments, the pitch (along Y-axis) between two adjacent nanowells is in a range of from smaller than 1$\mu$m to about 5$\mu$m. Under the circumstances that the width of the nanowell **316** is smaller than about 50 nm or the height of the nanowell **316** is larger than about 600 nm, the sample may be difficult to load into the nanowell **316** and reach the bottom thereof due to capillary force. On the other hand, under the circumstances that the width of the nanowell **316** is larger than about 650 nm, the nanowell **316** may have insufficient spatial confinement to the sample. In one embodiment, the pitch of the two adjacent nanowells **316** is smaller than about 1 $\mu$m. Under some circumstances that the pitch of the two adjacent nanowells is larger than about 5 $\mu$m, the density of the nanowells **316** is too small to maintain the detection throughput. In some embodiments, the nanowells **316** may have a width of about 80 nm and a height of about 100 nm, and the pitch between two adjacent nanowells **316** is about 1.3$\mu$m.

In some embodiments, in order to improve the stability of the sequencing complex (e.g., polymerase replication complex) in the nanowells **316** of the sequencing chip **31,** a bottom surface or a sidewall of the nanowells **316** are chemically modified to improve the adhesion to the sequencing complex at the linker sites. For example, a hydrophilic treatment may be performed at the bottom surfaces and/or the sidewalls of the nanowells **316.** Optionally, a hydrophobic treatment may be performed at the top surface of a cover layer (e.g., the upper cladding layer **313)** defining the nanowells **316,** thereby to avoid non-corporation fluorophore labels and hence reducing the unwanted background fluorescent signal. Furthermore, the hydrophobic treatment may prevent the fluids including the non-incorporated fluorophore labels flowing through the non-reaction area and hence reducing the unwanted background fluorescent signal.

In some embodiments, the substrate **310** as shown in FIG. **12** can be opaque silicon wafer, transparent glass, quartz, fused silica, sapphire, etc.

In some embodiments, the space of the nanowells **316** may be defined by patterning the upper cladding layer **313**. In other words, two adjacent nanowells on the sequencing chip **31** are separated by the patterned upper cladding layer **313**. The upper cladding layer **313** is configured to reduce the background signal such as the scatter light comes from no-formation space (i.e., the space between adjacent linker sites). In some embodiments, the upper cladding layer **313** can be transparent but physically prevent the fluorescent dye-labeled substrates reaching excitation field other than the sequencing site **10** (i.e., the linker site). The patterned cover layer can be non-transparent that partially or totally blocking the light comes from no-information space. In some embodiments, the upper cladding layer **313** is a metal sheet. In some embodiments, the upper cladding layer **313** is a chemically modified surface which reduces the chance of fluorescent dye-labeled substrate coming closer to the excitation field. In some embodiments, the upper cladding layer **313** can be a plastic film. In some embodiments, the upper cladding layer **313** can be $SiO_2$ or other inorganic oxide that having low refractive index comparing to the core layer **317**.

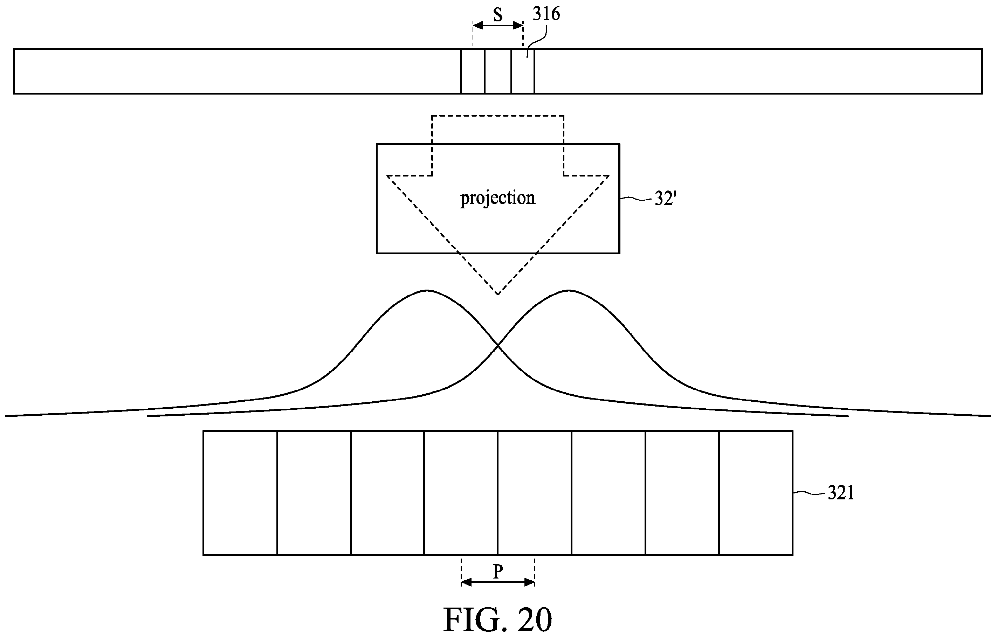

FIG. **20** illustrates the pitch of the nanowell **316** and the pitch of the pixels on the sensor device **321**. In some embodiments, the pitch of sequencing sites (S) may be designed as:

$$2P >= S \times F >= 1P$$

That is, a product of the pitch and the overall magnification is equal to or greater than one pitch and equal to or smaller than 2 pitches, wherein (F) is the overall magnification of the detection module **32'**, (P) is the pitch of pixels of the sensor device **321** that equal to the pixel size. In some embodiments, the pixel size is smaller than or equal to about 10 $\mu$m, about 5 $\mu$m, or about 3$\mu$m. In some embodiments, the pitch of two adjacent sequencing sites is smaller than or equal to about 5 $\mu$m, about 3 $\mu$m, or about 1 $\mu$m.

In some embodiments, the fluorescent signal from a sequencing site may firstly be collected by the objective lens **323** and then be projected onto the sensor device **321** in a size of less than 1.5 or one time of pixel size P. The fluorescent signal may be well concentrated onto one or at most four pixels while overlapping the boundaries and thus resulting a well-detected signal strength as the "small spots" **23** previously shown in FIG. **10.**

One embodiment of the apparatus following the design rule as aforementioned includes a sensor device **321** having 2000 x 1500 pixels, and each of the pixels has a pixel size and pitch of 3.45 $\mu$m, an objective lens 322 with NA 0.7 and 20X magnification, a projection lens **323** of 0.25X magnification, and a sequencing chip **31** with nanowell sequencing sites pitch 1.38 $\mu$m,
wherein

$$X1 \times X2 = 5$$

$$(2 \times 3.45 \ \mu m)/5 = 1.38 \ \mu m.$$

That is, the pitch of sequencing site is 1.38 $\mu$m, which is conformed to the design rule as aforementioned. In some embodiments, the number of effective sequencing sites is 750,000.

One embodiment of the apparatus follow the design rule as aforementioned includes a sensor device **321** having 2000 x 1500 pixels, and each of the pixels has a pixel size and pitch of 3.45 $\mu$m, an objective lens **322** with NA 0.7 and 20X magnification, a projection lens **323** of 0.25X magnification, and a sequencing chip **31** with nanowell sequencing sites pitch 1.04 $\mu$m,
wherein

$$X1 \times X2 = 5$$

$$(2 \times 3.45 \ \mu m)/5 = 1.38 \ \mu m$$

$$(1 \times 3.45 \ \mu m)/5 = 0.69 \ \mu m$$

That is, the pitch of sequencing sites is 1.04 μm while 1.04μm >0.69 μm and < 1.38 μm, which is conformed to the design rule as aforementioned. In some embodiments, the number of effective sequencing sites is 1,333,333.

One embodiment of the apparatus follow the design rule as aforementioned includes a sensor device **321** having 2000 x 1500 pixels, and each of the pixels has a pixel size and pitch of 3.45 μm, an objective lens **322** with NA 0.7 and 20X magnification, and a projection lens **323** of 0.25X magnification, and a sequencing chip **31** with nanowell sequencing sites pitch 0.7 μm, wherein

$$X1 \times X2 = 5$$

$$(1 \times 3.45 \text{ μm})/5 = 0.69 \text{ μm}$$

That is, the pitch of sequencing sites 0.7μm while 0.7 μm > 0.69 μm, which is conformed to design rule as aforementioned. In some embodiments, the number of effective sequencing sites is 3,000,000.

The present apparatus and system are able to detect single-molecule nucleic acids with higher performance, i.e. higher sequencing sites number by using lens-based optical module. Furthermore, the cost of the detection is also reduced by utilizing a simplified and replaceable sequencing chip. The sequencing signal from a site is projected onto less than 1.5 pixels or even less than 1 pixel in size on the sensor device to concentrate the signal intensity thereon and drastically improves the detection signal strength. As a result, bulky high sensitivity and expensive scientific grade CCD or CMOS sensor is not necessary and thus the cost of detection module may be reduced.

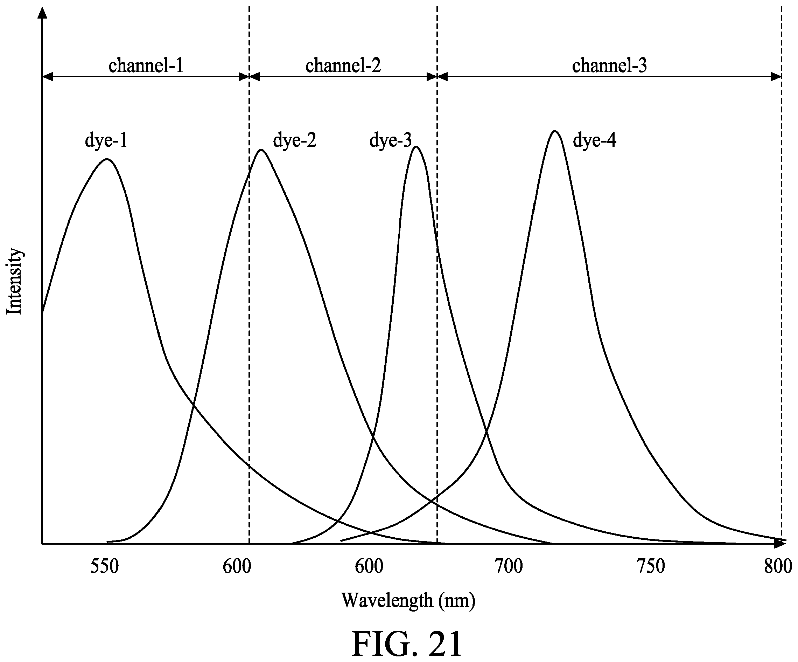

FIG. **21** illustrates the spectral bands of the labeled fluorophores. In some embodiments, each of the nucleotide sequences of a sequencing four d-NTPs ATCG are labeled with different fluorophores (fluorescent dyes) that may emit distinct wavelengths. As shown in the figure, there are three channels of spectral range may be used to resolve these different fluorophores by calculating the weightings of different channels and can be analyzed and translated into sequencing data. For example, when lasers are utilized as the excitation energy and thus are coupled into the waveguide and are guided to the sequencing sites; dye 1, which is located at a specific sequencing site in the array, will be evanescently excited and the light emitted thereby can be collected by channel 1 and channel 2. Based on the emission spectra information, for example, only channel 1 will show pixel signal values above a threshold, therefore weightings (1, 0, 0) is equivalent to the specific incorporated nucleotide labeled with dye 1 at that reaction site. However, if the dye is changed to dye 2, the result will show weightings (1, 1, 0) which means channel 1 and 2 shows pixel value above a threshold, therefore weightings (1, 1, 0) is equivalent to the specific incorporated nucleotide labeled with dye 2. Dye 3 will be evanescently excited by lasers as well and the result will show weightings (0, 1, 1). However, if the dye is changed to dye 4, the result of weightings (0, 0, 1) will appears. Note these weightings (1, 0, 0), (1, 1, 0), (0, 1, 1) and (0, 0, 1) are for illustrating purpose rather than exact number of the measurements.

In one embodiment, the trichroic prisms are designed such that channel 1 will receives wavelengths ranging from 530 nm to 610 nm, channel 2 will receive wavelengths ranging from 610 nm to 675 nm, and channel 3 will receive wavelengths ranging from 675nm to 800 nm, for example. The collected light intensity and therefore signal values of each pixel of these three optical sensors can be adjusted by changing the type of dyes or modify the spectral range of each channel on the trichroic beam splitter prism.

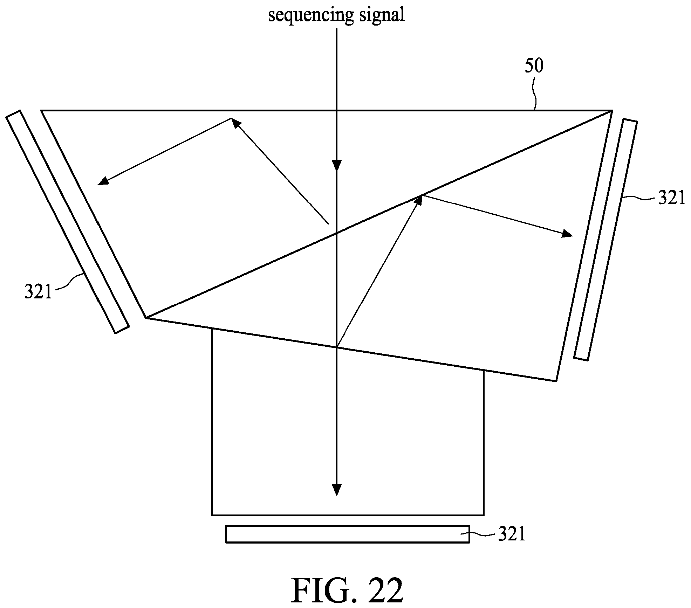

FIG. **22** illustrates a Philips type prism according to some embodiments of the present disclosure. In some embodiments, a wavelength splitter is used to direct the fluorescent light with different wavelength spectral ranges to the at least two sensor devices. In some embodiments, a Philips type prism **50** is employed to separate the sequencing signals into three channels. The sensor devices **321** are glued (glue is not shown in the figure) firmly onto the prism and hence have a profound mechanical stability of the working environment. By glued the components into one piece, therefore, the device is more tolerable to vibration and by which the pixel correlation in three sensors are fixed. Philips prism **50** is commercially available and practical but other types of color separators are also viable such as a cross dichroic prism or more conventionally, the cube dichroic beam splitters. In contrast to Byer filters that employed in common color sensors, Philips prism **50** may separate colors rather than filter and hence it may absorb unwanted colors and provide much higher overall transmission efficiency. Virtually, no photon is wasted by using prism trichroic beam splitters.

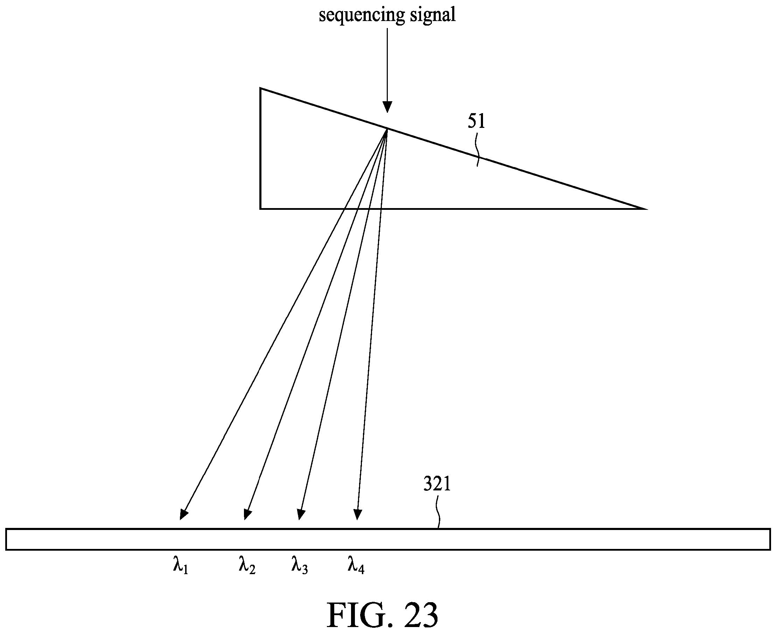

FIG. **23** illustrates a dispersive device for spectral detection according to some embodiments of the present disclosure. In some embodiments, instead of using multi-channel sensor devices, a dispersive device **51** such as a wedge prism or an optical grating can be deployed to spread out different spectral ranges into different pixels in an array. For example, to spread out different spectral ranges into 4, 5, or 6 pixels in an array.

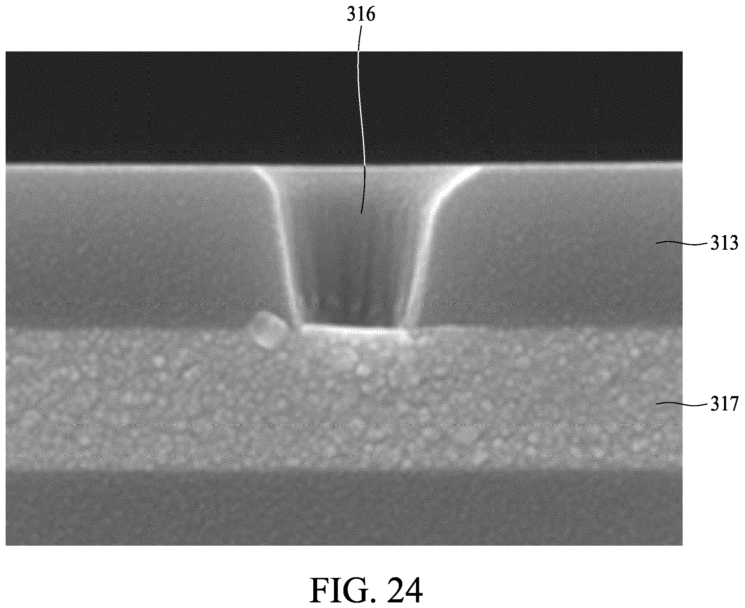

FIG. **24** is a SEM cross sectional image of the sequencing chip with a nanowell **316** according to some embodiments of the present disclosure. The nanowell **316** is built in the cladding layer **313** and nanowell bottom is close to the upper surface of the core layer **317**.

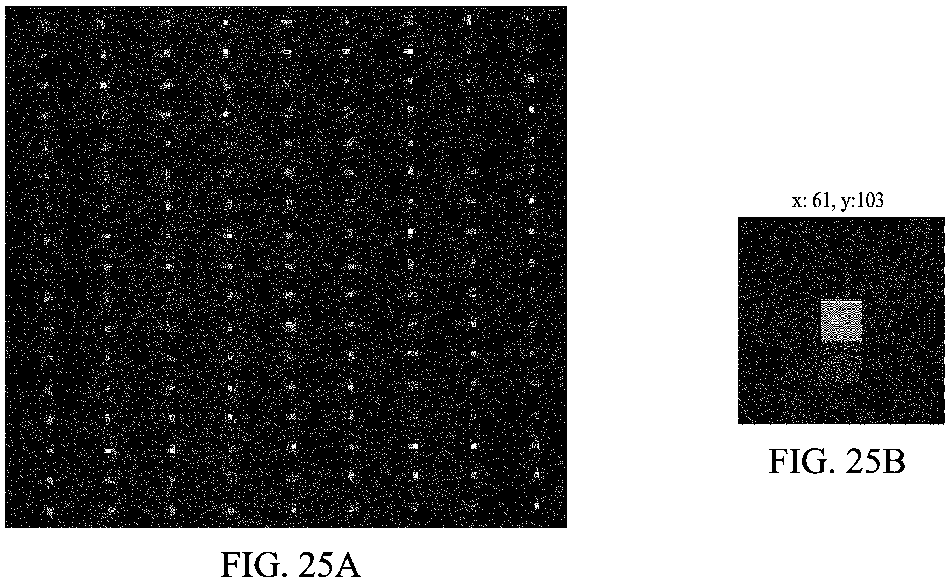

FIG. **25A** and FIG. **25B** illustrate snap shots of frames of sequencing raw data according to some embodiments of the present disclosure. FIG. **25A** is part of a snap shot of one frame from the dye-touched down data. One can see the fluorophores signals catches by the sensor device. As this optical arrangement, the signals are at most overlapping four adjacent pixels and solid signal strength may be ensured. FIG. **25B** illustrates one typical pixel. One can see that most of the light is projected on one pixel and only a little portion spreads onto the adjacent pixel. Overall, the sequencing site signals are quite concentrated.

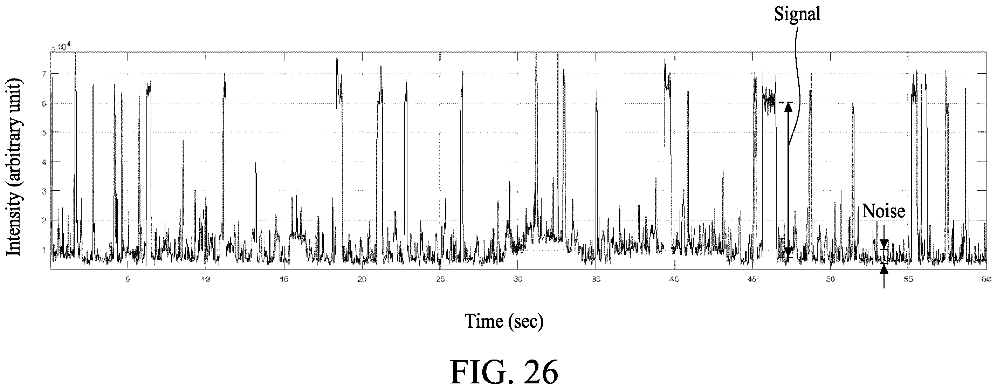

FIG. **26** illustrates a sequencing time trace from one nanowell of one channel. One can see the rise and fall of the fluorescent signal are accompanied with the happening of the dye touched-down events. By the arrangement of the optical components provided in the present disclosure, the signal to noise ratio (SNR) is quite good (e.g., signal/noise = 54976/2441 = 22.52) and is commercially available through using reasonable priced industrial CMOS cameras.

The foregoing outlines features of several embodiments so that those skilled in the art may better understand various aspects of the present disclosure. Those skilled in the art should appreciate that they may readily use the present disclosure as a basis for designing or modifying other processes and structures for carrying out the same purposes and/or achieving the same advantages of the embodiments introduced herein.

**Claims**

1. An apparatus for continuous single molecule nucleic acids sequencing, comprising:

   a detection module (32) configured to detect a fluorescent light generated from a sequencing chip (31), the detection module comprising:

   a sensor device (321);
   an objective lens (322) having a first magnification; and
   a projective lens (323) having a second magnification; and

   the sequencing chip, the sequencing chip comprising:

   a waveguide (312);
   a light coupler (311), configured to couple an excitation light into the waveguide;
   a plurality of sequencing sites (10), the excitation light is provided to each sequencing sites; and
   a beam adjusting mechanism (41), configured to transform a narrower beam from the light coupler to a wider beam entering the sequencing site;

   wherein the objective lens and the projective lens are configured to transmit the fluorescent light from the sequencing chip to the sensor device; and wherein the second magnification is less than unity.

2. The apparatus of claim 1, wherein the detection module comprises at least two sensor devices, and the detection module further comprises a wavelength splitter configured to direct the fluorescent light with different wavelength spectral ranges to the at least two sensor devices, preferably

   wherein the wavelength splitter is a cross dichroic prism;
   or
   wherein the wavelength splitter is a Philips-type prism;
   or
   wherein the detection module comprises three sensor devices, and the wavelength splitter is a cross dichroic prism, a Philips-type prism, or a cube dichroic beam splitter, wherein the sensor devices and the wavelength splitter are glued into a firm piece, and the wavelength splitter separates the fluorescent light received by the sensor devices into three channels having a wavelength less than 610 nm, from 610 nm to 675 nm, and greater than 675nm, respectively;
   or
   wherein the at least two sensor devices are affixed to the wavelength splitter;
   or
   the detection module comprises three sensor devices.

3. The apparatus of claim 1, wherein the detection module further comprises a wedge prism or an optical grating configured to spread out different spectral ranges of the fluorescent light into 4, 5, or 6 pixels in an array.

4. The apparatus of claim 1, wherein the light coupler comprises a grating coupler, and the waveguide comprises a thin film waveguide or a channel waveguide, wherein the grating coupler is configured to receives light from an excitation light source, and the thin film waveguide or the channel waveguide is configured to guide the light to the sequencing sites so as to form an evanescent wave excitation field at a bottom of sequencing sites, preferably wherein the sequencing sites are in a nanowell or a nanotrench defined by an upper cladding layer of the waveguide, and/or preferably wherein a bottom of the nanowell or the nanotrench is hydrophilic and/or preferably wherein wherein the nanowell or the nanotrench comprises a width ranged from about 50 nm to about 650 nm and a height ranged from about 20 nm to about 600 nm and preferably, wherein a top surface of the upper cladding layer is hydrophobic.

5. The apparatus of claim 4, wherein a bottom of each of the sequencing sites comprises a modified surface configured to selectively affix sequencing complex.

6. The apparatus of claim 5, wherein the sequencing sites are in a nanowell or a nanotrench defined by a patterned cover layer.

7. The apparatus of claim 5, wherein a top surface of the patterned cover layer is hydrophobic.

8. The apparatus in claim 1, further comprising:

    an excitation light source configured to emit the excitation light; and
    a filter configured to block the excitation light from entering the sensor device.

9. The apparatus of claim 1, wherein a number of the sequencing sites exceeds about 150,000, 300,000, 500,000 or 1,000,000.

10. The apparatus in claim 1, wherein a numerical aperture of the objective lens is smaller than 1.

11. The apparatus in claim 1, further comprising a microfluidic structure coupled to the sequencing sites.


**Patentansprüche**

1. Eine Vorrichtung zur kontinuierlichen Einzelmolekül-Nukleinsäure-Sequenzierung, umfassend:
   ein Detektionsmodul (32), das so konfiguriert ist, dass es ein von einem Sequenzierungschip (31) erzeugtes Fluoreszenzlicht erfasst, wobei das Detektionsmodul umfasst:

    eine Sensorvorrichtung (321);
    eine Objektivlinse (322) mit einer ersten Vergrößerung; und
    eine Projektionslinse (323) mit einer zweiten Vergrößerung, und
    den Sequenzierungschip, wobei der Sequenzierungschip Folgendes umfasst:

        einen Wellenleiter (312);
        einen Lichtkoppler (311), der so konfiguriert ist, dass er ein Anregungslicht in den Wellenleiter einkoppelt;
        eine Vielzahl von Sequenzierungsstellen (10),
        wobei das Anregungslicht an jede Sequenzierungsstelle geliefert wird; und
        einen Strahleinstellmechanismus (41), der so konfiguriert ist, dass er einen schmaleren Strahl von dem Lichtkoppler in einen breiteren Strahl umwandelt, der in die Sequenzierungsstelle eintritt;
        wobei die Objektivlinse und die Projektionslinse so konfiguriert sind, dass sie das Fluoreszenzlicht von dem Sequenzierungschip zu der Sensorvorrichtung übertragen; und
        wobei die zweite Vergrößerung kleiner als eins ist.

2. Die Vorrichtung nach Anspruch 1, wobei das Detektionsmodul mindestens zwei Sensorvorrichtungen umfasst und das Detektionsmodul ferner einen Wellenlängenteiler umfasst, der so konfiguriert ist, dass er das Fluoreszenzlicht mit unterschiedlichen Wellenlängenspektralbereichen auf die mindestens zwei Sensorvorrichtungen richtet, vorzugsweise

    wobei der Wellenlängenteiler ein dichroitisches Kreuzprisma ist;
    oder

wobei der Wellenlängenteiler ein Prisma vom Philips-Typ ist;

oder

wobei das Detektionsmodul drei Sensorvorrichtungen umfasst und der Wellenlängenteiler ein kreuzdichroitisches Prisma, ein Prisma vom Philips-Typ oder ein würfeldichroitischer Strahlenteiler ist, wobei die Sensorvorrichtungen und der Wellenlängenteiler in ein festes Stück geklebt sind und der Wellenlängenteiler das von den Sensorvorrichtungen empfangene Fluoreszenzlicht in drei Kanäle mit einer Wellenlänge von weniger als 610 nm, von 610 nm bis 675 nm bzw. größer als 675 nm aufteilt;

oder

wobei die mindestens zwei Sensorvorrichtungen an dem Wellenlängenteiler befestigt sind;

oder

das Detektionsmodul drei Sensorvorrichtungen umfasst.

3. Die Vorrichtung nach Anspruch 1, wobei das Detektionsmodul ferner ein Keilprisma oder ein optisches Gitter umfasst, das so konfiguriert ist, dass es verschiedene Spektralbereiche des Fluoreszenzlichts in 4, 5 oder 6 Pixel in einem Array aufteilt.

4. Die Vorrichtung nach Anspruch 1, wobei der Lichtkoppler einen Gitterkoppler umfasst und der Wellenleiter einen Dünnschicht-Wellenleiter oder einen Kanal-Wellenleiter umfasst, wobei der Gitterkoppler so konfiguriert ist, dass er Licht von einer Anregungslichtquelle empfängt, und der Dünnschicht-Wellenleiter oder der Kanal-Wellenleiter so konfiguriert ist, dass er das Licht zu den Sequenzierungsstellen leitet, um ein evaneszentes Wellenanregungsfeld an einem Boden der Sequenzierungsstellen zu bilden,

wobei die Sequenzierungsstellen vorzugsweise in einer Nanomulde oder einem Nanograben liegen, der durch eine obere Mantelschicht des Wellenleiters definiert ist, und/oder vorzugsweise wobei ein Boden der Nanomulde oder des Nanograbens hydrophil ist und/oder vorzugsweise, wobei die Nanomulde oder der Nanograben eine Breite im Bereich von etwa 50 nm bis etwa 650 nm und eine Höhe im Bereich von etwa 20 nm bis etwa 600 nm aufweist und vorzugsweise, wobei eine obere Oberfläche der oberen Mantelschicht hydrophob ist.

5. Die Vorrichtung nach Anspruch 4, wobei ein Boden jeder der Sequenzierstellen eine modifizierte Oberfläche umfasst, die so konfiguriert ist, dass sie selektiv einen Sequenzierkomplex anbringt.

6. Die Vorrichtung nach Anspruch 5, wobei sich die Sequenzierungsstellen in einer Nanomulde oder einem Nanograben befinden, die durch eine strukturierte Deckschicht definiert sind.

7. Die Vorrichtung nach Anspruch 5, wobei eine Oberseite der gemusterten Deckschicht hydrophob ist.

8. Die Vorrichtung nach Anspruch 1 umfasst außerdem:

eine Anregungslichtquelle, die so konfiguriert ist, dass sie das Anregungslicht emittiert; und einen Filter, der so konfiguriert ist, dass er das Erregungslicht am Eintritt in die Sensorvorrichtung hindert.

9. Die Vorrichtung nach Anspruch 1, wobei die Anzahl der Sequenzierstellen etwa 150.000, 300.000, 500.000 oder 1.000.000 übersteigt.

10. Die Vorrichtung nach Anspruch 1, wobei die numerische Apertur der Objektivlinse kleiner als 1 ist.

11. Die Vorrichtung nach Anspruch 1 umfasst ferner eine mikrofluidische Struktur, die mit den Sequenzierstellen verbunden ist.

**Revendications**

1. Un dispositif de séquençage d'acide nucléique à molécule unique en continu, comprenant :
un module de détection (32) configuré pour détecter une lumière fluorescente générée par une puce de séquençage (31), le module de détection comprenant :

un dispositif de détection (321) ;
une lentille d'objectif (322) ayant un premier grossissement ; et
une lentille de projection (323) ayant un deuxième grossissement, et
la puce de séquençage, la puce de séquençage comprenant :

un guide d'ondes (312) ;
un coupleur de lumière (311) configuré pour coupler une lumière d'excitation dans le guide d'ondes ;
une pluralité de sites de séquençage (10),
la lumière d'excitation étant fournie à chaque site de séquençage ; et
un mécanisme d'ajustement de faisceau (41) configuré pour convertir un faisceau plus étroit provenant du coupleur de lumière en un faisceau plus large qui entre dans le site de séquençage ;
dans lequel la lentille d'objectif et la lentille de projection sont configurées pour transmettre la lumière fluorescente de la puce de séquençage au dispositif de détection ; et
dans lequel le second grossissement est inférieur à un.

2. Le dispositif selon la revendication 1, dans lequel le module de détection comprend au moins deux dispositifs de détection et le module de détection comprend en outre un diviseur de longueur d'onde configuré pour diriger la lumière fluorescente avec différentes gammes spectrales de longueurs d'onde vers les au moins deux dispositifs de détection, de préférence

dans lequel le diviseur de longueur d'onde est un prisme dichroïque croisé ;
ou
dans lequel le diviseur de longueur d'onde est un prisme de type Philips ;
ou
dans lequel le module de détection comprend trois dispositifs de détection et le diviseur de longueur d'onde est un prisme dichroïque croisé, un prisme de type Philips ou un diviseur de faisceau dichroïque cubique, dans lequel les dispositifs de détection et le diviseur de longueur d'onde sont collés en une pièce solide et le diviseur de longueur d'onde divise la lumière fluorescente reçue par les dispositifs de détection en trois canaux ayant une longueur d'onde inférieure à 610 nm, de 610 nm à 675 nm et supérieure à 675 nm, respectivement ;
ou
dans lequel les au moins deux dispositifs de détection sont fixés au diviseur de longueur d'onde ;
ou
le module de détection comprend trois dispositifs de détection.

3. Le dispositif selon la revendication 1, dans lequel le module de détection comprend en. outre un prisme en coin ou un réseau optique configuré pour diviser différentes régions spectrales de la lumière fluorescente en 4, 5 ou 6 pixels dans un réseau.

4. Le dispositif selon la revendication 1, dans lequel le coupleur de lumière comprend un coupleur de grille et le guide d'onde comprend un guide d'onde à couche mince ou un guide d'onde à canal, le coupleur de grille étant configuré pour recevoir de la lumière d'une source de lumière d'excitation, et le guide d'onde à couche mince ou le guide d'onde à canal étant configuré pour guider la lumière vers les sites de séquençage pour former un champ d'excitation d'onde évanescent au fond des sites de séquençage,
dans lequel les sites de séquençage sont de préférence situés dans un nanovallon ou un nanograben défini par une couche de gainage supérieure du guide d'onde, et/ou de préférence, un fond de la nanobosse ou du nanograben est hydrophile et/ou de préférence, dans lequel le nanovallon ou le nanograben a une largeur dans la plage de environ 50 nm à environ 650 nm et une hauteur dans la plage d'environ 20 nm à environ 600 nm, et de préférence, dans lequel une surface supérieure de la couche de revêtement supérieure est hydrophobe.

5. Le dispositif selon la revendication 4, dans lequel un fond de chacun des sites de séquençage comprend une surface modifiée configurée pour attacher sélectivement un complexe de séquençage.

6. Le dispositif selon la revendication 5, dans lequel les sites de séquençage sont situés dans un nanomoule ou un nanograben défini par une couche de couverture structurée.

7. Le dispositif selon la revendication 5, dans lequel une face supérieure de la couche supérieure à motifs est hydrophobe.

**8.** Le dispositif selon la revendication 1 comprend en outre :

une source de lumière d'excitation configurée pour émettre la lumière d'excitation ; et
un filtre configuré pour empêcher la lumière d'excitation d'entrer dans le dispositif de détection.

**9.** Le dispositif selon la revendication 1, dans lequel le nombre de sites de séquençage dépasse environ 150.000, 300.000, 500.000 ou 1.000.000.

**10.** Le dispositif selon la revendication 1, dans lequel l'ouverture numérique de la lentille d'objectif est inférieure à 1.

**11.** Le dispositif selon la revendication 1 comprend en outre une structure microfluidique connectée aux sites de séquençage.

FIG. 1

EP 3 839 598 B1

FIG. 2

EP 3 839 598 B1

100X/1.5 oil
TIRF
∞/0.17 WD 0.21

14

FIG. 3

100X/1.5 oil
TIRF
∞/0.17 WD 0.21

14

θ

FIG. 4

FIG. 5

EP 3 839 598 B1

FIG. 6

EP 3 839 598 B1

FIG. 7

FIG. 8A

FIG. 8B

FIG. 9A

FIG. 9B

14

14

FIG. 10

FIG. 11

FIG. 12

EP 3 839 598 B1

311

316

315

311

**FIG. 13**

FIG. 14

EP 3 839 598 B1

311          318          311

FIG. 15

EP 3 839 598 B1

311  41  316  311

315

**FIG. 16**

EP 3 839 598 B1

311     41          318          311

**FIG. 17**

FIG. 18

FIG. 19A

EP 3 839 598 B1

**FIG. 19B**

FIG. 19C

EP 3 839 598 B1

FIG. 20

EP 3 839 598 B1

FIG. 21

FIG. 22

FIG. 23

EP 3 839 598 B1

FIG. 24

FIG. 25A

x: 61, y:103

FIG. 25B

EP 3 839 598 B1

FIG. 26

EP 3 839 598 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 62950551 A
- US 8318094 B
- US 7170050 B
- US 6867851 B2
- US 20030151735 A1
- US 20100297647 A1
- WO 2014207089 A1
- WO 02016023011 A1
- US 20110306039 A1
- US 7767441 B
- US 6682297 B2

**Non-patent literature cited in the description**

- *Science*, 02 January 2009, vol. 323 (5910), 133-138